# EUROPÄISCHE PATENTSCHRIFT

(11) **EP 2 992 336 B1**
(45) Veröffentlichungstag und Bekanntmachung des Hinweises auf die Patenterteilung: **05.12.2018**
(21) Anmeldenummer: 14717409.8
(22) Anmeldetag: 27.03.2014
(51) Int. Cl.: G01P 15/08, B81B 5/00, B81C 1/00, G01P 15/125

(54) **BESCHLEUNIGUNGSSENSOR SOWIE VERFAHREN ZUR HERSTELLUNG EINES BESCHLEUNIGUNGSSENSORS**
ACCELERATION SENSOR AND METHOD FOR PRODUCING AN ACCELERATION SENSOR
DÉTECTEUR D'ACCÉLÉRATION ET PROCÉDÉ DE PRODUCTION D'UN DÉTECTEUR D'ACCÉLÉRATION

(30) Priorität: 02.05.2013 DE 102013007593
(43) Veröffentlichungstag der Anmeldung: 09.03.2016
(73) Patentinhaber: Northrop Grumman LITEF GmbH, 79115 Freiburg (DE)
(72) Erfinder: GEIGER, Wolfram, 72116 Mössingen (DE); BARTHOLOMEYCZIK, Julian, 72762 Reutlingen (DE); LEINFELDER, Peter, 79238 Ehrenkirchen (DE)
(74) Vertreter: Müller Hoffmann & Partner
(86) Internationale Anmeldenummer: PCT/EP2014/000833
(87) Internationale Veröffentlichungsnummer: WO 2014/177243

(56) Entgegenhaltungen:
- WO-A1-2006/105314
- DE-A1-102008 016 004
- DE-A1-102011 083 487
- US-A- 6 133 670
- US-A1- 2007 029 629
- US-A1- 2012 031 185

## Beschreibung

Die Erfindung bezieht sich auf einen Beschleunigungssensor und ein Verfahren zur Herstellung eines solchen Beschleunigungssensors. Die Erfindung bezieht sich genauer gesagt auf einen mikro-elektro-mechanischen Beschleunigungssensor zum Messen einer Beschleunigung parallel zu einer Substratoberfläche des Beschleunigungssensors, sowie auf ein Verfahren zur Herstellung eines solchen mikromechanischen Beschleunigungssensors.

Mikro-elektro-mechanische Beschleunigungssensoren sind Mikrosysteme oder auch MEMS (engl.: micro-electro-mechanical systems), welche in der Lage sind, Beschleunigungen zu detektieren. Üblicherweise ist hierzu mindestens eine Probemasse (oder auch Pendel) vorgesehen, welches bei einer Beschleunigung des Sensors relativ zu einem Substrat des Sensors ausgelenkt wird. Hierzu kann die Probemasse z. B. mit Hilfe einer Feder beweglich mit dem Substrat verbunden sein.

Um die Beschleunigung zu detektieren, ist eine Elektrode (im Folgenden: "bewegliche Elektrode") Bestandteil der Probemasse und auf dem Substrat ist eine feste Gegenelektrode angebracht, welche der beweglichen Elektrode gegenübersteht. Verändert sich nun bei einer Auslenkung der Probemasse der Abstand zwischen der beweglichen Elektrode und der Gegenelektrode, so wird dies durch einen Regelkreis (Closed-Loop) detektiert und eine entsprechende Spannung an die Elektroden angelegt, welche zu einer Rückstellung der Probemasse führt. Die Höhe der beaufschlagten Spannung dient hierbei zur Bestimmung der Beschleunigung.

Um Beschleunigungen in mehr als einer Dimension detektieren zu können, können z. B. drei baugleiche Beschleunigungssensoren vorgesehen sein, welche jeweils ihre Detektionsachse in eine der drei Raumachsen ausgerichtet haben. Alternativ oder zusätzlich ist es möglich, dass z. B. auf demselben Substrat mehrere Probemassen vorgesehen sind, welche in unterschiedliche Richtungen auslenkbar sind.

Aufgrund ihres vorteilhaften linearen Verhaltens haben sich in letzter Zeit Beschleunigungssensoren mit ineinander greifenden (bzw. eintauchenden) Elektroden bewährt. Hierbei sind die bewegliche Elektrode und die Gegenelektrode als Kammelektroden ausgebildet, wobei die Zähne der jeweiligen Kämme ineinander greifen. Die bewegliche Elektrode und die Gegenelektrode bilden somit einen Kondensator, wobei eine Rückstellspannung, welche man an die Elektroden dieses Kondensators zur Rückstellung anlegen muss, in weiten Bereichen linear zur Auslenkung der Probemasse ist.

Ein Problem dieser Anordnung ineinander greifender Elektroden ist jedoch eine mangelnde Dämpfung, so dass bei hohen Beschleunigungen z. B. die bewegliche Elektrode gegen die Gegenelektrode bzw. die Probemasse gegen Abstandshalter stoßen kann, was zu mechanischen Defekten und ungenauen bzw. unbrauchbaren Messergebnissen führen kann.

Die Druckschrift DE-A1-10 2011 083487 offenbart einen Beschleunigungssensor mit einem Substrat, einer seismischen Masse und einer Detektionseinheit, wobei die seismische Masse aufgrund einer auf den Beschleunigungssensor einwirkenden äußeren Beschleunigung in Form einer Auslenkungsbewegung gegenüber dem Substrat entlang einer Auslenkungsrichtung auslenkbar ist und wobei die Detektionseinheit zur Detektion einer Auslenkung der seismischen Masse in Form einer Detektionsbewegung gegenüber dem Substrat entlang einer Detektionsrichtung auslenkbar ist und wobei ferner die Detektionseinheit derart mit der seismischen Masse gekoppelt ist, dass die Amplitude der Auslenkungsbewegung entlang der Auslenkungsrichtung größer als die Amplitude der Detektionsbewegung entlang der Detektionsrichtung ist.

Die Druckschrift US-A1-2012/031185 offenbart einen mikromechanischen Beschleunigungssensor umfassend ein Substrat und eine gegenüber dem Substrat in einer Detektionsrichtung beweglich angeordnete seismische Masse, wobei der mikromechanische Sensor wenigstens eine Dämpfungseinrichtung zum Dämpfen von Bewegungen der seismischen Masse senkrecht zur Detektionsrichtung umfasst.

Die Druckschrift WO-A1-2006/ 105314 offenbart einen kapazitive Beschleunigungsmesser umfassend eine erste feste Elektrode und eine zweite feste Elektrode, welche durch einen Spalt voneinander getrennt sind. Eine bewegliche Elektrode ist zwischen der ersten und zweiten festen Elektroden angeordnet, wobei die bewegliche Elektrode zwischen der ersten und der zweiten festen Elektrode beweglich ist. Die bewegliche Elektrode ist so dimensioniert, um einen Pressdämpfungseffekt zwischen den beweglichen und feststehenden Elektroden zu erzeugen, um die Bewegung der beweglichen Elektrode zu dämpfen. Eine Schaltungsanordnung bestimmt die Position der beweglichen Elektrode in einer beliebigen Position im Wesentlichen über den gesamten Spalt zwischen den ersten und zweiten festen Elektroden.

Die Druckschrift US-A1-2007/029629 offenbart einen mikromechanischen Sensor und ein Verfahren zur Herstellung und vertikalen Integration von Sensor und Schaltung auf Wafer-Ebene. Das Verfahren beinhaltet die Verarbeitung eines erste Wafers, um eine Erfassungsstruktur unvollständig zu definieren, auf einer ersten Oberfläche davon, die Verarbeitung eines zweiten Wafers um Schaltungen auf einer Oberfläche davon zu definieren, Verbinden des ersten und zweiten Wafers miteinander, und dann Ätzen des Wafers, um die erste Sensorstruktur zu vervollständigen, einschließlich der Freisetzung eines Elements relativ zu dem zweiten Wafer.

Die US 6 133 670 A offenbart einen kompakten elektrostatischen Aktuator mit Kammstrukturen, der sich für mikro-elektro-mechanische Anwendungen eignet. Der Aktuator weist eine Mehrzahl von ineinander eingreifenden elektrostatischen Kämmen auf, von denen einige beweglich und von denen andere feststehend ausgebildet sind. Der Aktuator weist des Weiteren elektrostatische Schilde auf, die geeignet sind, unerwünschte elektrostatische Felder zu eliminieren.

Die DE 10 2008 016 004 A1 offenbart einen Beschleunigungssensor, der ein Gehäuse mit wenigstens einer ersten gasgefüllten Kavität aufweist, in der zur Detektion einer zu erfassenden Beschleunigung eine erste Detektionseinheit angeordnet ist, wobei der Inertialsensor eine Dämpfungsstruktur aufweist.

Der vorliegenden Erfindung liegt die Aufgabe zugrunde, einen Beschleunigungssensor mit ineinander greifenden Kammelektroden zur Verfügung zu stellen, bei dem eine Dämpfung der Auslenkungsbewegung der Probemasse erhöht ist. Die Aufgabe wird durch den Gegenstand der unabhängigen Ansprüche gelöst. Vorteilhafte Weiterbildungen ergeben sich aus den Unteransprüchen.

Ein erfindungsgemäßer Beschleunigungssensor kann z. B. ein Substrat aufweisen, welches eine Substratoberfläche aufweist. Ferner kann der Beschleunigungssensor eine Probemasse aufweisen, welche relativ zum Substrat in eine im Wesentlichen zur Substratoberfläche parallele positive Auslenkungsrichtung (x) beweglich ist, wobei die Probemasse eine mit der Probemasse bewegliche Kammelektrode aufweist und wobei die bewegliche Kammelektrode eine Mehrzahl von Zähnen aufweist, welche sich in die positive Auslenkungsrichtung (x) erstrecken. Der Beschleunigungssensor kann weiterhin eine fest mit dem Substrat verbundene Gegenelektrode aufweisen, wobei die Gegenelektrode eine feste Kammelektrode aufweist und wobei die feste Kammelektrode eine Mehrzahl von Zähnen aufweist, welche sich in eine der positiven Auslenkungsrichtung (x) entgegengesetzte Richtung erstrecken und wobei die Zähne der beweglichen Kammelektrode und die Zähne der festen Kammelektrode ineinander greifen. Weiterhin kann der Beschleunigungssensor eine fest mit dem Substrat verbundene Schirmelektrode aufweisen, welche geeignet ist, während einer Auslenkungsbewegung der Probemasse eine pneumatische Dämpfung der Probemasse zu erhöhen.

Unter dem Begriff der "pneumatischen Dämpfung" ist im Folgenden z. B. eine Dämpfung durch eine Vergrößerung bzw. Verkleinerung eines Teilvolumens zu verstehen, wobei z. B. Gas von einem sich verkleinernden Teilvolumen in ein sich vergrößerndes Teilvolumen strömt. Der Begriff der pneumatischen Dämpfung wird weiter unten detaillierter erläutert.

Ferner kann die bewegliche Kammelektrode einen Kammrücken mit einer Kammrückenoberfläche aufweisen, welche im Wesentlichen senkrecht zu der positiven Auslenkungsrichtung (x) ist. Die Schirmelektrode kann eine Schirmelektrodenoberfläche aufweisen, welche im Wesentlichen parallel zu der Kammrückenoberfläche ist.

Hierbei können sich die Kammrückenoberfläche und die Schirmelektrodenoberfläche gegenüberstehen. Während einer Auslenkungsbewegung der Probemasse kann sich ein Abstand zwischen der Kammrückenoberfläche und der Schirmelektrodenoberfläche verändern, wobei eine Veränderung des Abstands dazu geeignet sein kann, eine pneumatische Dämpfung der Probemasse zu erhöhen.

Die Probemasse kann z. B. bei einer Beschleunigung aufgrund ihrer Massenträgheit ausgelenkt werden und nach einer gewissen Zeit aufgrund von Federrückstellkräften wieder in ihre Ruhelage bewegt werden. Ferner kann z. B. eine Spannung, welche an die bewegliche Kammelektrode und an die feste Kammelektrode bzw. an die Gegenelektrode angelegt wird, aufgrund elektrostatischer Kräfte dazu führen, dass die Probemasse eine Auslenkung erfährt. Bei einer Auslenkungsbewegung der Probemasse kann z. B. der sich verändernde Abstand zwischen den sich gegenüberstehenden Oberflächen (der Kammrückenoberfläche und der Schirmelektrodenoberfläche) dazu führen, dass sich ein Volumen zwischen der Kammrückenoberfläche und der Schirmelektrodenoberfläche verändert. Eine Veränderung des Volumens kann dazu beitragen, dass eine pneumatische Dämpfung der Probemasse erhöht wird.

Weiterhin kann sich die Probemasse und die Schirmelektrode auf einem gleichen elektrischen Potential befinden.

Hierbei können beispielsweise durch das Anlegen einer Spannung mithilfe entsprechender elektrischer Anschlüsse die Probemasse und die Schirmelektrode auf das gleiche elektrische Potential gebracht werden. Wenn sich die Probemasse und die Schirmelektrode auf dem gleichen elektrischen Potential befinden, existieren keine anziehenden oder abstoßenden elektrostatischen Kräfte zwischen ihnen. Somit wird eine Auslenkungsbewegung der Probemasse nicht störend von elektrostatischen Kräften zwischen der Probemasse und der Schirmelektrode beeinflusst. Dies kann die Genauigkeit einer Beschleunigungsmessung erhöhen.

Die Gegenelektrode und die Schirmelektrode können über eine Isolationsschicht mechanisch miteinander verbunden sein.

Die Isolationsschicht kann z. B. eine Oxidschicht sein, welche für eine elektrische Isolierung der Schirmelektrode von der Gegenelektrode sorgt. Wenn die Gegenelektrode und die Schirmelektrode mechanisch miteinander verbunden sind, kann dies den Vorteil haben, dass die Schirmelektrode dünner ausgebildet sein kann, da die Gegenelektrode für mechanische Stabilität sorgt. Hierdurch kann beispielsweise Platz eingespart werden und /oder mechanische Stabilität gewonnen werden.

Die Probemasse kann eine mit der Probemasse bewegliche weitere bewegliche Kammelektrode aufweisen, wobei die weitere bewegliche Kammelektrode eine Mehrzahl von Zähnen aufweisen kann, welche sich in die der positiven Auslenkungsrichtung (x) entgegengesetzte Richtung erstrecken können. Der Beschleunigungssensor kann ferner eine fest mit dem Substrat verbundene weitere Gegenelektrode aufweisen, wobei die weitere Gegenelektrode eine weitere feste Kammelektrode aufweisen kann und wobei die weitere feste Kammelektrode eine Mehrzahl von Zähnen aufweisen kann, welche sich in die positive Auslenkungsrichtung (x) erstrecken und wobei die Zähne der weiteren beweglichen Kammelektrode und die Zähne der weiteren festen Kammelektrode ineinander greifen können. Der Beschleunigungssensor kann eine fest mit dem Substrat verbundene weitere Schirmelektrode aufweisen, welche geeignet ist, während einer Auslenkungsbewegung der Probemasse eine pneumatische Dämpfung der Probemasse zu erhöhen.

Durch die weitere bewegliche Kammelektrode und die weitere feste Kammelektrode kann z. B. eine Beschleunigung in die positive Auslenkungsrichtung (x), aber auch in die der positiven Auslenkungsrichtung (x) entgegengesetzte Richtung genauer detektiert werden. Somit existieren sowohl für Auslenkungen in positive als auch in negative x-Richtung entsprechende Elektroden für die Detektion einer Beschleunigung bzw. zur Rückstellung der Probemasse.

Die Schirmelektrode und die weitere Schirmelektrode können integral miteinander verbunden sein.

Hierbei kann z. B. eine einzige Elektrode vorgesehen sein, welche sowohl eine Funktion der Schirmelektrode, also auch eine Funktion der weiteren Schirmelektrode übernimmt. Dies kann z. B. vorteilhaft für die mechanische Stabilität der Schirmelektrode bzw. der weiteren Schirmelektrode sein. Zudem kann durch eine solche Anordnung z. B. Platz auf dem Substrat gespart werden, da ein Zwischenraum zwischen Schirmelektrode und weiterer Schirmelektrode wegfällt.

Der Beschleunigungssensor kann wenigstens ein Federelement aufweisen, welches die Probemasse und das Substrat miteinander koppelt, so dass die Probemasse eine Auslenkungsbewegung in die positive Auslenkungsrichtung (x) durchführen kann und so dass die Probemasse in eine zur positiven Auslenkungsrichtung (x) senkrechten und zur Substratoberfläche parallelen Richtung (y) im Wesentlichen steif gelagert ist.

Auch die Lagerung der Probemasse in eine Richtung (z) senkrecht zur Substratoberfläche kann im Wesentlichen steif ausgeführt sein.

Durch eine steife Lagerung der Probemasse in Richtungen, in welche keine Auslenkungsbewegung bzw. Beschleunigung detektiert werden soll, kann z. B. eine Genauigkeit einer Beschleunigungsmessung erhöht werden, da sich ein Abstand zwischen der beweglichen Kammelektrode und der festen Kammelektrode nur in x-Richtung verändert, nicht aber in y-Richtung oder in z-Richtung.

Ein Verfahren zum Herstellen eines Beschleunigungssensors kann umfassen: Herstellen eines Substrats, welches eine Substratoberfläche aufweist; und Herstellen einer Probemasse, welche relativ zum Substrat in eine im Wesentlichen zur Substratoberfläche parallele positive Auslenkungsrichtung (x) beweglich ist, wobei die Probemasse eine mit der Probemasse bewegliche Kammelektrode aufweist und wobei die bewegliche Kammelektrode eine Mehrzahl von Zähnen aufweist, welche sich in die positive Auslenkungsrichtung (x) erstrecken. Das Verfahren kann weiterhin umfassen: Herstellen einer fest mit dem Substrat verbundenen Gegenelektrode, wobei die Gegenelektrode eine feste Kammelektrode aufweist und wobei die feste Kammelektrode eine Mehrzahl von Zähnen aufweist, welche sich in eine der positiven Auslenkungsrichtung (x) entgegengesetzte Richtung erstrecken und wobei die Zähne der beweglichen Kammelektrode und die Zähne der festen Kammelektrode ineinander greifen; und Herstellen einer fest mit dem Substrat verbundenen Schirmelektrode, welche geeignet ist, während einer Auslenkungsbewegung der Probemasse eine pneumatische Dämpfung der Probemasse zu erhöhen.

Das Verfahren zum Herstellen eines Beschleunigungssensors kann ferner umfassen: Anpassen eines Gasdrucks des Beschleunigungssensors zum Einstellen einer optimalen Dämpfung der Auslenkungsbewegung der Probemasse.

Das Verfahren zum Herstellen eines Beschleunigungssensors kann ferner umfassen: Wählen eines Abstands zwischen der beweglichen Kammelektrode und der Schirmelektrode bei einem gegebenen Gasdruck des Beschleunigungssensors zum Einstellen einer optimalen Dämpfung der Auslenkungsbewegung der Probemasse.

Hierbei kann z. B. ein optimaler Gasdruck (bzw. Fülldruck) bzw. ein optimaler Abstand zwischen der beweglichen Kammelektrode und der Schirmelektrode zu einer optimalen Dämpfung der Probemasse führen. Ferner kann die Wahl der zur Füllung des Beschleunigungssensors verwendeten Gasart dazu führen, dass eine optimale Dämpfung erreicht wird. Bei der optimalen Dämpfung ist die Dämpfung weder so hoch, dass die Probemasse zu stark gedämpft wird und somit nicht ausreichend ausgelenkt werden kann, noch so gering ist, dass z. B. die beweglichen und die festen Kammelektroden aneinander stoßen, bzw. die beweglichen Elektroden oder die Probemasse an einen Abstandshalter anschlagen.

Im Nachfolgenden werden anhand der Figuren Ausführungsformen der Erfindung, deren Funktionsweise sowie deren Vorteile beschrieben. Elemente der Ausführungsformen sind miteinander kombinierbar, sofern sie sich nicht ausschließen.
Fig. 1 zeigt eine schematische Draufsicht auf einen Beschleunigungssensor gemäß der vorliegenden Erfindung.
Fig. 2 zeigt eine schematische Draufsicht auf einen Beschleunigungssensor gemäß der vorliegenden Erfindung, wobei die elektrischen Anschlussmöglichkeiten der Probemasse, der Gegenelektroden und der Schirmelektroden schematisch dargestellt sind.
Fig. 3 zeigt eine schematische Draufsicht auf einen Beschleunigungssensor gemäß der vorliegenden Erfindung, wobei die Gegenelektroden und die Schirmelektroden über Isolationsschichten mechanisch miteinander verbunden sind.

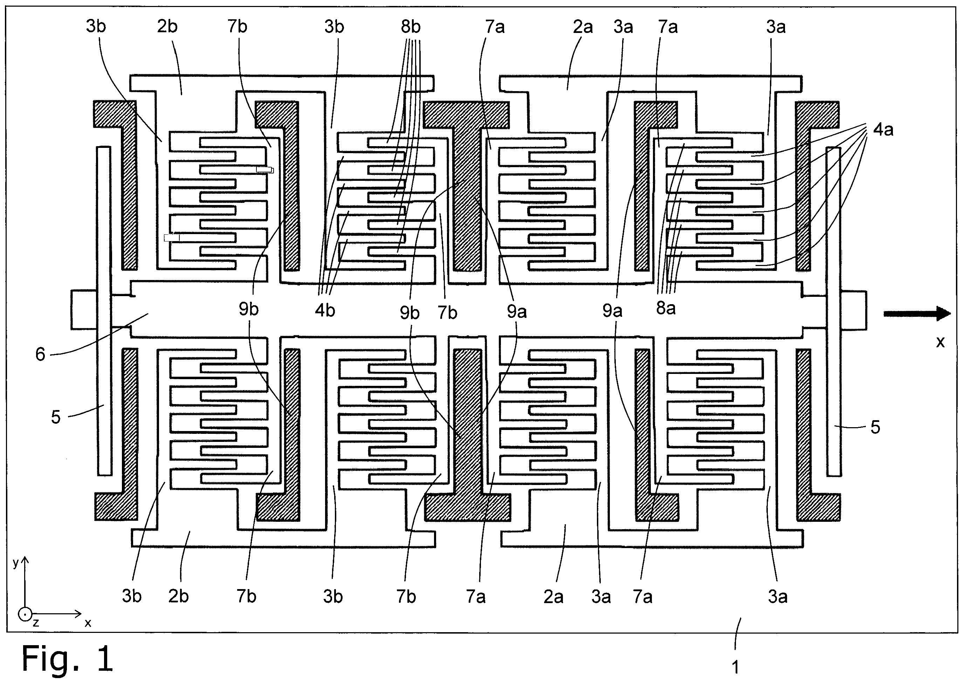

Fig. 1 zeigt eine Draufsicht eines Beschleunigungssensors zum Messen einer Beschleunigung in eine positive Auslenkungsrichtung (x-Richtung) parallel zur Zeichnungsebene. In der Zeichnungsebene befindet sich eine Substratoberfläche eines Substrats 1, auf welchem die weiteren Elemente des Beschleunigungssensors angeordnet sind. Somit ist im Folgenden die x-Achse eine sensitive Achse, entlang welcher die (negative oder positive) Beschleunigung gemessen wird. Die y-Achse steht senkrecht dazu und befindet sich in der Darstellung der Fig. 1 parallel zur Zeichnungsebene bzw. parallel zur Substratoberfläche des Substrats 1. Die z-Achse steht senkrecht zur x-Achse und zur y-Achse und beschreibt somit eine Normale der Zeichnungsebene der Fig. 1 bzw. der Substratoberfläche.

Fest mit dem Substrat 1 verankert sind Gegenelektroden 2a und weitere Gegenelektroden 2b. Im Ausführungsbeispiel der Fig. 1 sind jeweils zwei Gegenelektroden 2a und zwei weitere Gegenelektroden 2b dargestellt, wobei die Anzahl der Gegenelektroden 2a bzw. weiteren Gegenelektroden 2b nicht darauf beschränkt ist. So können z. B. auch nur jeweils eine Gegenelektrode 2a und eine weitere Gegenelektrode 2b vorgesehen sein oder jeweils mehr als zwei Gegenelektroden 2a und mehr als zwei weitere Gegenelektroden 2b vorgesehen sein. Es können aber auch z. B. nur Gegenelektroden 2a und keine weiteren Gegenelektroden 2b vorgesehen sein.

Die fest mit dem Substrat 1 verbundenen Gegenelektroden 2a weisen feste Kammelektroden 3a auf, welche jeweils mehrere Zähne 4a aufweisen, die sich in negative x-Richtung erstrecken, also in eine Richtung, die der positiven Auslenkungsrichtung (x) entgegengesetzt ist. Diese festen Kammelektroden werden als "fest" bezeichnet, da sie bzw. die entsprechende Gegenelektrode 2a fest mit dem Substrat verankert sind. Die festen Kammelektroden können z. B. so ausgestaltet sein, dass sie einen Kammrücken aufweisen sowie mehrere sich rechtwinklig vom Kammrücken aus erstreckende Zähne 4a.

Analog dazu können die fest mit dem Substrat 1 verbundenen weiteren Gegenelektroden 2b weitere feste Kammelektroden 3b aufweisen, welche mehrere Zähne 4b aufweisen können, die sich in die positive Auslenkungsrichtung (x) erstrecken. Auch diese weiteren festen Kammelektroden können wie oben beschrieben einen Kammrücken und mehrere sich davon ausgehend erstreckende Zähne 4b aufweisen.

Im Ausführungsbeispiel der Fig. 1 besitzt jede Gegenelektrode 2a und jede weitere Gegenelektrode 2b jeweils zwei Kammelektroden (feste Kammelektroden 3a bzw. weitere feste Kammelektroden 3b), wobei die Anzahl der festen Kammelektroden 3a bzw. weiteren festen Kammelektroden 3b nicht darauf beschränkt ist. So können z. B. pro Gegenelektrode 2a bzw. pro weitere Gegenelektrode 2b auch nur jeweils eine feste Kammelektrode 3a bzw. eine weitere feste Kammelektrode 3b vorgesehen sein oder jeweils mehr als zwei feste Kammelektroden 3a bzw. mehr als zwei weitere feste Kammelektroden 3b vorgesehen sein.

Es sind auch Ausführungsbeispiele denkbar, in denen lediglich Gegenelektroden 2a und keine weiteren Gegenelektroden 2b vorgesehen sind, so dass lediglich Gegenelektroden 2a mit dem Substrat verankert sind, welche Kammelektroden 3a aufweisen, deren Zähne 4a sich in negative x-Richtung erstrecken.

Mittels einer oder mehrerer Federelemente 5 ist eine Probemasse 6 (oft auch als "Pendel" bezeichnet) mit dem Substrat 1 verbunden. Das Federelement 5 koppelt die Probemasse 6 und das Substrat 1 so miteinander, dass die Probemasse 6 eine Auslenkungsbewegung in die positive Auslenkungsrichtung (positive x-Richtung) und in eine der positiven Auslenkungsrichtung entgegengesetzte Richtung (negative x-Richtung) durchführen kann. Aufgrund der Massenträgheit wird hierbei z. B. bei einer Beschleunigung des Substrats 1 in negative x-Richtung die Probemasse 6 relativ zum Substrat 1 in positive x-Richtung ausgelenkt. Die Probemasse 6 ist über die Federelemente 5 derart mit dem Substrat 1 verankert, dass es zwar in positive und negative x-Richtung ausgelenkt werden kann, aber sowohl in y-Richtung als auch in z-Richtung im wesentlichen steif gelagert ist.

Die Probemasse 6 weist mindestens eine mit der Probemasse 6 bewegliche Kammelektrode 7a auf, wobei diese "bewegliche" Kammelektrode 7a fest mit der Probemasse 6 verbunden ist und somit relativ zum Substrat 1 beweglich gelagert ist. Die Anzahl der beweglichen Kammelektroden 7a kann sich z. B. nach der Anzahl der festen Kammelektroden 3a richten, insofern dass pro fester Kammelektrode 3a eine bewegliche Kammelektrode 7a an der Probemasse 6 vorgesehen sein kann.

Die mindestens eine bewegliche Kammelektrode 7a kann z. B. einen Kammrücken und mehrere Zähne 8a aufweisen, wobei sich die Zähne 8a der beweglichen Kammelektrode 7a in die positive Auslenkungsrichtung (x), also in positive x-Richtung, erstrecken. Die bewegliche Kammelektrode 7a und die feste Kammelektrode 3a sind als eintauchende Elektroden angeordnet. Somit greifen die Zähne 8a der beweglichen Elektrode 7a und die Zähne 4a der festen Kammelektrode 3a ineinander. Die Zähne 8a und 4a können z. B. so ineinander greifen, dass sich in y-Richtung betrachtet immer ein Zahn 8a der beweglichen Kammelektrode 7a und ein Zahn 4a der festen Kammelektrode 3a abwechseln.

Es kann z. B. für jede feste Kammelektrode 3a eine bewegliche Kammelektrode 7a vorgesehen sein.

Analog dazu kann die Probemasse 6 mindestens eine mit der Probemasse 6 bewegliche weitere bewegliche Kammelektrode 7b aufweisen. Z. B. kann pro weitere feste Kammelektrode 3b eine weitere bewegliche Kammelektrode 7b vorgesehen sein.

Auch die weitere bewegliche Kammelektrode 7b kann einen Kammrücken und eine Mehrzahl an Zähnen 8b aufweisen, wobei die Zähne 8b der weiteren beweglichen Kammelektrode 7b sich in negative x-Richtung erstrecken, also in die der positiven Auslenkungsrichtung (x) entgegengesetzte Richtung.

Analog zu den obigen Ausführungen bezüglich der festen Kammelektrode 3a und der beweglichen Kammelektrode 7a können auch die Zähne 8b der weiteren beweglichen Kammelektrode 7b und die Zähne 4b der weiteren festen Kammelektrode 4b ineinander greifen.

Die Zähne der oben beschriebenen Kammelektroden greifen z. B. so ineinander, dass sie sich in einem Ruhezustand des Beschleunigungssensors nicht gegenseitig berühren. Es sollte vorzugsweise in positiver und negativer x-Richtung genügend Platz zwischen den Zähnen vorgesehen sein, so dass es bei einer Auslenkungsbewegung der Probemasse 6 nicht zu einer Berührung der jeweiligen Kammelektroden kommt. Die Anordnung eintauchender Elektroden bzw. ineinander greifender Kammelektroden hat den Vorteil, dass eine an die Elektroden anzulegende Rückstellspannung in weiten Bereichen annähernd linear zu der Auslenkung der Probemasse 6 ist. Um diese Linearität zu gewährleisten, kann es z. B. vorteilhaft sein, einen ausreichenden Abstand in x-Richtung zwischen den ineinander greifenden Kammelektroden zu lassen, damit nicht-lineare Plattenkondensator-Effekte zwischen den Spitzen der Zähne und den gegenüberliegenden Kammrücken weitgehend unterdrückt werden und somit vernachlässigbar sind.

Der Beschleunigungssensor ist vorzugsweise mit einem Gas unter einem bestimmten Druck gefüllt. Somit befindet sich zwischen den Zähnen der Kammelektroden ein Gas oder genauer gesagt Gasmoleküle. Wenn während einer Auslenkungsbewegung der Probemasse 6 sich nun z. B. eine bewegliche Kammelektrode 7a auf eine feste Kammelektrode 3a zubewegt, muss das Gas aus den Zwischenräumen der Zähne strömen. Dies führt zu einer gewissen "pneumatischen Dämpfung" der Schwingung bzw. der Auslenkungsbewegung der Probemasse 6.

Unter dem Begriff der pneumatischen Dämpfung ist also im Folgenden eine Dämpfung durch eine Vergrößerung bzw. Verkleinerung eines Teilvolumens zu verstehen, wobei z. B. Gas von einem sich verkleinernden Teilvolumen in ein sich vergrößerndes Teilvolumen strömt. Hierbei kommt es zu Druckunterschieden zwischen den Teilvolumina, da das Gas aufgrund seiner Viskosität nur endlich schnell von dem einen Teilvolumen in das andere Teilvolumen strömen kann. Somit führt z. B. der in dem sich verkleinernden Teilvolumen vorhandene Überdruck zu einer Kraftwirkung auf die Außenwände des sich verkleinernden Volumens. Die Auslenkungsbewegung bzw. die Schwingung wird gedämpft, da eine Gegenkraft existiert, die der Auslenkungsbewegung der Probemasse 6 entgegenwirkt.

Die pneumatische Dämpfung, welche durch das veränderliche Volumen zwischen den Zähnen der Kammelektroden hervorgerufen wird ist oft nicht ausreichend, um eine gewünschte hohe Dämpfungswirkung zu erzielen.

Deshalb sind bei dem Beschleunigungssensor der vorliegenden Erfindung zusätzliche Schirmelektroden 9a vorgesehen, welche die pneumatische Dämpfung der Probemasse 6 erhöhen. Die Schirmelektroden 9a sind vorzugsweise ähnlich wie die Gegenelektroden 2a fest mit dem Substrat 1 verankert, sodass die Probemasse 6 relativ zu den Schirmelektroden 9a ausgelenkt wird. Die Schirmelektroden 9a können z. B. so angeordnet sein, dass eine Schirmelektrodenoberfläche der Schirmelektroden 9a in Richtung der beweglichen Kammelektroden 7a der Probemasse 6 zeigt. Genauer gesagt können die Schirmelektroden 9a eine Schirmelektrodenoberfläche aufweisen, welche im Wesentlichen parallel zu einer Kammrückenoberfläche der beweglichen Kammelektrode 7a ist und dieser gegenüber steht. Die Schirmelektrodenoberfläche und die Kammelektrodenoberfläche können hierbei z. B. im Wesentlichen senkrecht zur positiven Auslenkungsrichtung (x) stehen. Somit bewegt sich während einer Auslenkungsbewegung der Probemasse 6 die Kammrückenoberfläche auf die Schirmelektrodenoberfläche zu, was aufgrund des sich verkleinernden Volumens zwischen Schirmelektrode 9a und beweglicher Kammelektrode 7a die pneumatische Dämpfung der Auslenkungsbewegung der Probemasse 6 erhöht.

Ferner können zur Erhöhung der Dämpfung der Probemasse 6 auch hinter den Kammrücken der weiteren beweglichen Kammelektroden 3b weitere Schirmelektroden 9b vorgesehen sein. Genauer gesagt kann die mindestens eine weitere bewegliche Kammelektrode 3b eine Kammrückenoberfläche aufweisen, welche im Wesentlichen senkrecht zu der positiven Auslenkungsrichtung (x) ist. Ferner kann die weitere Schirmelektrode 9b eine Schirmelektrodenoberfläche aufweisen, welche im Wesentlichen parallel zur Kammrückenoberfläche der weiteren beweglichen Kammelektrode 3b ist, wobei sich die Schirmelektrodenoberfläche und die Kammrückenoberfläche gegenüberstehen. Bei einer Auslenkungsbewegung der Probemasse 6 verringert sich ein Abstand zwischen der Kammrückenoberfläche und der Schirmelektrodenoberfläche. Somit tragen also auch die weiteren Schirmelektroden 9b zur pneumatischen Dämpfung der Auslenkungsbewegung bzw. der Schwingung bei.

Wie in der Fig. 1 gezeigt, können auch kombinierte Schirmelektroden vorgesehen sein, welche gleichzeitig die Funktion der Schirmelektrode 9a als auch der weiteren Schirmelektrode 9b übernehmen. Somit können die Schirmelektrode 9a und die weitere Schirmelektrode 9b integral miteinander verbunden sein. Diese kombinierten Schirmelektroden können z. B. zwei parallele Schirmelektrodenoberflächen aufweisen, wobei eine der Schirmelektrodenoberflächen einer Kammrückenoberfläche einer beweglichen Kammelektrode 7a gegenübersteht und die andere der Schirmelektrodenoberflächen einer Kammrückenoberfläche einer weiteren beweglichen Kammelektrode 7b gegenübersteht. Somit kann die kombinierte Schirmelektrode effektiv sowohl Auslenkungsbewegungen der Probemasse 6 in die positive als auch in die negative x-Richtung dämpfen.

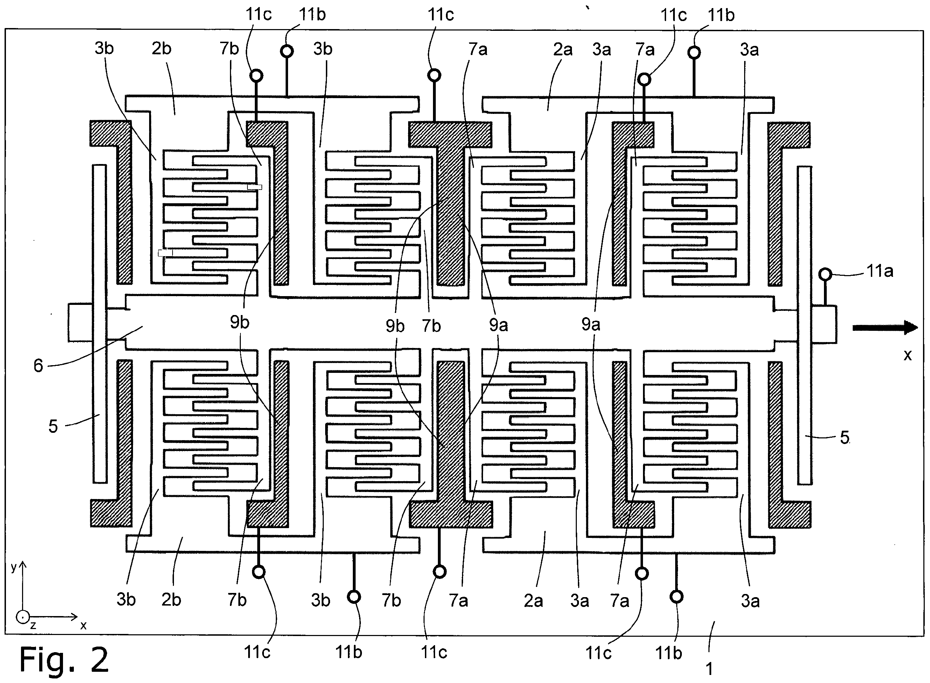

Fig. 2 zeigt eine schematische Draufsicht eines weiteren Ausführungsbeispiels eines erfindungsgemäßen Beschleunigungssensors. Der in Fig. 2 gezeigte Beschleunigungssensor weist im Wesentlichen dieselben Elemente auf wie der in Fig. 1 dargestellte Beschleunigungssensor, wobei gleiche Elemente gleiche Bezugszeichen tragen.

In Fig. 2 sind die elektrischen Anschlussmöglichkeiten der jeweiligen Elektroden schematisch illustriert. Hierbei kann ein elektrischer Anschluss 11a für die Probemasse 6 bzw. für die beweglichen Kammelektroden 7a bzw. weiteren beweglichen Kammelektroden 7b vorgesehen sein. Ferner können elektrische Anschlüsse 11b für die Gegenelektroden 2a und die weiteren Gegenelektroden 2b bzw. für die jeweiligen festen Kammelektroden 3a und weiteren festen Kammelektroden 3b vorgesehen sein.

Im Closed Loop Betrieb kann über den elektrischen Anschluss 11a der Probemasse 6 und die elektrischen Anschlüsse 11b der Gegenelektroden 2a bzw. der weiteren Gegenelektroden 2b die Auslenkung der Probemasse detektiert werden und anhand eines entsprechenden Regelkreises eine Rückstellspannung beaufschlagt werden, welche zu einer Rückstellung der Probemasse in ihre Ausgangsposition führt.

Wird der Beschleunigungssensor im Open Loop Betrieb betrieben, so kann über die elektrischen Anschlüsse 11a bzw. 11b eine Kapazitätsänderung gemessen werden, auf deren Basis die Beschleunigung des Beschleunigungssensors errechnet werden kann.

Ferner können elektrische Anschlüsse 11c für die Schirmelektroden 9a bzw. für die weiteren Schirmelektroden 9b vorgesehen sein. Über die elektrischen Anschlüsse 11c können die Schirmelektroden 9a bzw. die weiteren Schirmelektroden 9b auf ein gemeinsames elektrisches Potential gelegt werden. Hierzu können die elektrischen Anschlüsse 11c der Schirmelektroden 9a und der weiteren Schirmelektroden 9b beispielsweise untereinander verbunden sein.

Zudem können die Schirmelektroden 9a bzw. die weiteren Schirmelektroden 9b über ihre elektrischen Anschlüsse 11c auf ein gleiches elektrisches Potential mit der Probemasse 6 gelegt werden. Wenn sich die Schirmelektroden und die Probemasse 6 auf dem gleichen elektrischen Potential befinden, befinden sich auch die Schirmelektroden und die entsprechenden beweglichen Kammelektroden 7a bzw. weitere bewegliche Kammelektroden 7b auf dem gleichen elektrischen Potential. Dies führt dazu, dass es zu keinen ungewollten elektrostatischen Kräften zwischen den Schirmelektroden 9a bzw. weiteren Schirmelektroden 9b und den jeweiligen gegenüberliegenden beweglichen Kammelektroden 7a bzw. weiteren beweglichen Kammelektroden 7b kommt.

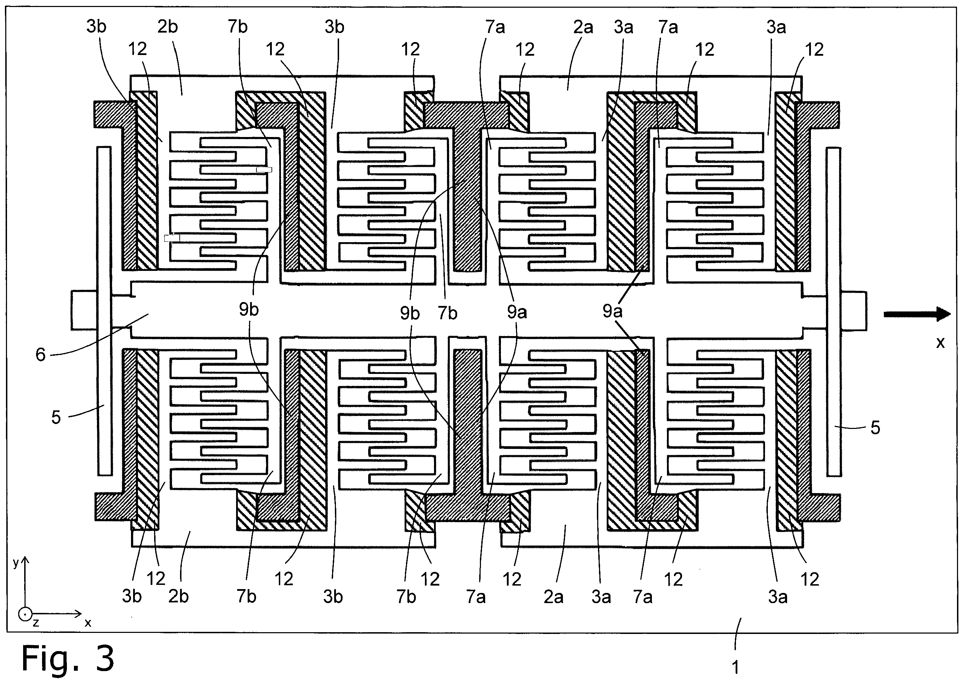

Fig. 3 zeigt eine schematische Draufsicht eines weiteren Ausführungsbeispiels eines erfindungsgemäßen Beschleunigungssensors. Der in Fig. 3 gezeigte Beschleunigungssensor weist im Wesentlichen dieselben Elemente auf wie der in Fig. 1 dargestellte Beschleunigungssensor, wobei gleiche Elemente gleiche Bezugszeichen tragen.

Bei dem in Fig. 3 dargestellten Beschleunigungssensor sind die Schirmelektroden 9a bzw. die weiteren Schirmelektroden 9b über eine Mehrzahl von Isolationsschichten 12 mit den entsprechenden Gegenelektroden 2a bzw. weiteren Gegenelektroden 2b mechanisch verbunden. Somit bilden die Schirmelektroden 9a und die Gegenelektroden 2a eine integrale Struktur, was die Stabilität der Anordnung deutlich verbessert. Somit ist es z. B. möglich, die Schirmelektroden 9a schmaler auszugestalten als in dem Ausführungsbeispiel der Fig. 1. Die Isolationsschicht 12 ist vorteilhaft, um die Schirmelektroden 9a und die Gegenelektroden 2a elektrisch voneinander zu isolieren. Eine solche elektrische Isolierung ist z. B. insbesondere dann sinnvoll, wenn die Schirmelektroden 9a, 9b und die Probemasse auf das gleiche elektrische Potential gebracht werden.

Zum Einstellen einer Stärke der durch die Schirmelektroden 9a, 9b verursachten Dämpfung sind z. B. zwei Möglichkeiten denkbar, welche beliebig miteinander kombiniert werden können.

So kann z. B. in einem Herstellungsprozess oder nach einem Herstellungsprozess ein Gasdruck (bzw. Fülldruck oder Innendruck) des Beschleunigungssensors so angepasst werden, dass eine optimale Dämpfung der Probemasse 6 erreicht wird. Hierbei kann die Stärke der pneumatischen Dämpfung bei üblichen Gasdrücken (bzw. Fülldrücken) mit der Höhe des Gasdrucks steigen. Bei höheren Gasdrücken wird die Dämpfung unabhängig vom Gasdruck. Es gibt einen optimalen Wert, da die Stärke der Dämpfung weder zu hoch noch zu niedrig sein sollte.

Ferner kann z. B. in einem Herstellungsprozess oder bereits in einem Gestaltungsprozess der Abstand zwischen der beweglichen Kammelektrode 7a (bzw. der weiteren beweglichen Kammelektrode 7b) und der Schirmelektrode 9a (bzw. der weiteren Schirmelektrode 9b) so eingestellt werden, dass eine optimale Dämpfung der Auslenkungsbewegung der Probemasse 6 erreicht wird. Je geringer dieser Abstand ist, umso höher ist bei den bei Beschleunigsungsmessern üblichen Fülldrücken (z. B. 1 mbar bis 1 bar) die Stärke der Dämpfung.

Selbstverständlich können die beiden oben genannten Verfahren zum Einstellen einer optimalen Dämpfung miteinander kombiniert werden.

Weitere Aspekte der Erfindung werden im Folgenden beschrieben.

Die Erfindung bezieht sich auf die Verwendung von Schirmelektroden 9a, 9b zur Erhöhung der Dämpfung in einem MEMS-Beschleunigungsmesser. Bei einem konstruktiven Aufbau mit eintauchenden Elektroden (vgl. Bild 2) aber ohne Schirmelektroden ergibt sich zwar lineareres Verhalten und ein einfaches Reglerdesign, es tritt aber nur wenig Dämpfung auf.

Dies kann unter Vibration zu einer unerwünschten Gleichrichtung führen. Durch Verwendung von zusätzlichen speziell ausgelegten Elektroden (Schirmelektroden) 9a, 9b lässt sich über die Spaltweite bei gegebenem Druck die Dämpfung so einstellen, dass sie einen optimalen Wert aufweist.

In der konventionellen Anordnung als eintauchende Finger (ohne Schirmelektroden) wird die Dämpfung schnell zu niedrig. Die Folge ist ein reduzierter Rückstellbereich. Hier werden die Gasdrücke oft hoch gewählt, um eine ausreichend hohe Dämpfung zu erreichen. Dies hat allerdings zur Folge, dass es über Temperatur zu größeren Druckschwankungen im Sensorinnenraum kommt und damit die Gefahr von mechanischen Verspannungen besteht. Um wiederum mit kleineren Drücken arbeiten zu können, müssen die Elektrodenspalte sehr klein gestaltet
werden. Die Folge sind höchste Anforderungen in der Fertigungstechnologie und ist damit keine zufriedenstellende Lösung.

Das Elektrodendesign der vorliegenden Erfindung mit eintauchenden Fingern wie in Fig. 1 sorgt bei richtiger Auslegung für einen nahezu konstanten und linearen Kraftverlauf der elektrostatischen Kräfte über der Auslenkung in x-Richtung, jedoch mit wenig Dämpfung. Die Schirmelektroden 9a, 9b in Plattenkondensatoranordnung können z. B. elektrisch auf ein Potential mit gleichem Wert wie die beweglichen Kammelektroden 7a, 7b gelegt werden, wodurch sie von der elektrostatischen Kraftwirkung her unwirksam bleiben, ebenso die Nichtlinearität dieser Anordnung bezüglich der Kraftwirkung und kann daher nur über die Gasfüllung zur Dämpfung beitragen. Ein weiterer Vorteil der Erfindung ist, dass diese mit nahezu jeder Prozesstechnologie realisiert werden kann. Ein zusätzlicher Vorteil ist, dass die gesamte aktive Struktur (alle beweglichen wie nicht beweglichen Teile) mit nur einem einzigen DRIE-Ätzprozessschritt hergestellt werden kann, was höchstmögliche Fertigungsgenauigkeit bedeutet.

In Fig. 1 ist ein Beschleunigungsmesser mit eintauchenden Elektroden skizziert entsprechend der hier zu beschreibenden Erfindung.

Der Beschleunigungsmesser besteht in seinen wesentlichen Teilen aus einer Probemasse 6 - auch als Pendel oder sensitive Masse bezeichnet -, die unterteilt werden kann in eine Tragstruktur, bewegliche bzw. schwingungsfähige Elektroden 7a mit Wirkrichtung in positive x-Richtung, bewegliche bzw. schwingungsfähige Elektroden 7b mit Wirkrichtung in negative x-Richtung sowie Biegebalkenfedern (oder Federelemente) 5, über die die sensitive Masse 6 an festen Ankern aufgehängt ist. Den beweglichen Elektroden 7a, 7b gegenüber angeordnet sind feste Elektroden 3a, 3b. Über eine geeignete elektrostatische Beaufschlagung lässt sich das Pendel stets in seiner Ruheposition halten. In dieser einfachen Anordnung ist die Funktion der Positionserfassung des Pendels (Pickoff) und die Rückstellung in einem Elektrodensystem vereint. Diese Funktionalität könnte auch aufgetrennt werden.

Das bewegliche Pendel 6 ist aufgebaut aus einer Tragestruktur, einer in positiver x-Richtung wirksamen Elektrodengruppe 7a, einer in negativer x-Richtung wirksamen Elektrodengruppe 7b sowie Biegebalkenfedern 5, die die bewegliche Struktur an die ortsfesten Anker koppeln. Den beweglichen Elektroden 7a, 7b gegenüber angeordnet sind feststehende Elektroden 3a, 3b. Letztere dienen dazu, bei geeigneter Beaufschlagung mit elektrischer Spannung elektrostatische Kräfte auf die bewegliche Struktur 6 aufbringen zu können. Feststehende 3a, 3b und die auf
der beweglichen Struktur 6 angebrachten beweglichen Elektroden 7a, 7b greifen intermittierend ineinander. Dabei ist darauf zu achten, dass zwischen dem Kopfende eines einzelnen Elektrodenzahnes zum Fußende des gegenüberliegenden Zahnes genügend Freiraum bleibt, damit die Wirkung einer Plattenkondensatoranordnung und damit deren Nichtlinearität untergeordnet bleibt.

Zwischen der Rückseite der feststehenden Elektroden 3a, 3b und den Rückseiten der beweglichen Elektroden 7a, 7b sind Schirmelektroden 9a, 9b eingefügt. Diese sind elektrisch vorteilhaft auf gleiches aber getrenntes Potential wie die beweglichen Elektroden 7a, 7b zu legen. Damit wird die Schwächung der elektrostatischen Kräfte in die gewünschten Richtungen durch die an den Rückseiten der Elektroden wirksamen Gegenkräfte unterbunden. Der wichtigere Aspekt dabei ist, dass diese Schirmelektroden 9a, 9b wegen ihrer großen Flächen z. B. zwischen der Schirmelektrode 9a und der beweglichen Kammelektrode 7a sowie der Plattenkondensatoranordnung zur Verwendung als dämpfendes Element geeignet sind.

Die Dämpfung lässt sich optimal einstellen über die Spaltgröße zwischen Schirmelektrode 9a, 9b und den beweglichen Elektroden 7a, 7b sowie den Gasdruck. Die Vorteile, große Dämpfungswerte problemlos erreichen zu können und die Vorteile einer konventionellen Elektrodenanordnung mit eintauchenden Elektroden ohne Schirmelektroden 9a, 9b, nämlich geringste Nichtlinearität und geringe Vibrationsgleichrichtung, sind mit dem Einfügen der Schirmelektroden 9a, 9b wie in Fig. 1 vereint.

Je nach Herstellverfahren ist es auch möglich die Schirmelektroden 9a, 9b und die festen Elektroden 3a, 3b in einer kombinierten Elektrodenstruktur zu vereinen. Zwischen Schirmelektrode 9a, 9b und Elektrode 3a, 3b kann dann z, B. eine Isolierschicht, z. B. eine Oxidschicht vorhanden sein. Das gleiche gilt dann selbstredend, wenn die Schirmelektrode 9a, 9b und Elektrode 3a, 3b eine Einheit bilden sollen. Ein Vorteil dabei wäre, dass die Schirmelektrode 9a, 9b deutlich dünner ausgeführt werden kann, da die strukturelle Steifigkeit schon durch die Elektroden 3a, 3b gegeben ist. Somit ist in diesem Ausführungsbeispiel ein Großteil des Platzbedarfes für die Schirmelektroden 9a, 9b hinfällig inklusive des zugehörigen Spaltes.

## Patentansprüche

1. Beschleunigungssensor mit
einem Substrat (1), welches eine Substratoberfläche aufweist;
einer Probemasse (6), welche relativ zum Substrat (1) in eine im Wesentlichen zur Substratoberfläche parallele positive Auslenkungsrichtung (x) beweglich ist, wobei die Probemasse (6) eine mit der Probemasse bewegliche Kammelektrode (7a) aufweist und wobei die bewegliche Kammelektrode (7a) eine Mehrzahl von Zähnen (8a) aufweist, welche sich in die positive Auslenkungsrichtung (x) erstrecken;
eine fest mit dem Substrat (1) verbundene Gegenelektrode (2a), wobei die Gegenelektrode (2a) eine feste Kammelektrode (3a) aufweist und wobei die feste Kammelektrode (3a) eine Mehrzahl von Zähnen (4a) aufweist, welche sich in eine der positiven Auslenkungsrichtung (x) entgegengesetzte Richtung erstrecken und wobei die Zähne (8a) der beweglichen Kammelektrode (7a) und die Zähne (4a) der festen Kammelektrode (3a) ineinander greifen; und
einer fest mit dem Substrat (1) verbundenen Schirmelektrode (9a), welche geeignet ist, während einer Auslenkungsbewegung der Probemasse (6) eine pneumatische Dämpfung der Probemasse (6) zu erhöhen, wobei
die bewegliche Kammelektrode (7a) einen Kammrücken mit einer Kammrückenoberfläche aufweist, welche im Wesentlichen senkrecht zu der positiven Auslenkungsrichtung (x) ist;
die Schirmelektrode (9a) eine Schirmelektrodenoberfläche aufweist, welche im Wesentlichen parallel zu der Kammrückenoberfläche ist;
sich die Kammrückenoberfläche und die Schirmelektrodenoberfläche gegenüberstehen;
während einer Auslenkungsbewegung der Probemasse (6) sich ein Abstand zwischen der Kammrückenoberfläche und der Schirmelektrodenoberfläche verändert; und
wobei eine Veränderung des Abstands dazu geeignet ist, eine pneumatische Dämpfung der Probemasse (6) zu erhöhen;
**dadurch gekennzeichnet, dass**
die Gegenelektrode (2a) und die Schirmelektrode (9a) über eine Isolationsschicht (12) mechanisch miteinander verbunden sind.

2. Beschleunigungssensor nach Anspruch 1,
**dadurch gekennzeichnet, dass**
sich die Probemasse (6) und die Schirmelektrode (9a) auf einem gleichen elektrischen Potential befinden.

3. Beschleunigungssensor nach einem der Ansprüche 1 bis 2,
**dadurch gekennzeichnet, dass**
die Probemasse (6) eine mit der Probemasse (6) bewegliche weitere bewegliche Kammelektrode (7b) aufweist, wobei die weitere bewegliche Kammelektrode (7b) eine Mehrzahl von Zähnen (8b) aufweist, welche sich in die der positiven Auslenkungsrichtung (x) entgegengesetzte Richtung erstrecken;
der Beschleunigungssensor eine fest mit dem Substrat (1) verbundene weitere Gegenelektrode (2b) aufweist, wobei die weitere Gegenelektrode (2b) eine weitere feste Kammelektrode (3b) aufweist und wobei die weitere feste Kammelektrode (3b) eine Mehrzahl von Zähnen (4b) aufweist, welche sich in die positive Auslenkungsrichtung (x) erstrecken und wobei die Zähne (8b) der weiteren beweglichen Kammelektrode (7b) und die Zähne (4b) der weiteren festen Kammelektrode (3b) ineinander greifen; und
der Beschleunigungssensor eine fest mit dem Substrat (1) verbundene weitere Schirmelektrode (9b) aufweist, welche geeignet ist, während einer Auslenkungsbewegung der Probemasse (6) eine pneumatische Dämpfung der Probemasse (6) zu erhöhen.

4. Beschleunigungssensor nach Anspruch 3,
**dadurch gekennzeichnet, dass**
die Schirmelektrode (9a) und die weitere Schirmelektrode (9b) integral miteinander verbunden sind.

5. Beschleunigungssensor nach einem der Ansprüche 1 bis 4,
**gekennzeichnet durch**
ein Federelement (5), welches die Probemasse (6) und das Substrat (1) miteinander koppelt, so dass die Probemasse (6) eine Auslenkungsbewegung in die positive Auslenkungsrichtung (x) durchführen kann und so dass die Probemasse (6) in eine zur positiven Auslenkungsrichtung (x) senkrechten und zur Substratoberfläche parallelen Richtung (y) im Wesentlichen steif gelagert ist.

6. Verfahren zum Herstellen eines Beschleunigungssensors, wobei das Verfahren umfasst:
Herstellen eines Substrats (1), welches eine Substratoberfläche aufweist;
Herstellen einer Probemasse (6), welche relativ zum Substrat (1) in eine im Wesentlichen zur Substratoberfläche parallele positive Auslenkungsrichtung (x) beweglich ist, wobei die Probemasse (6) eine mit der Probemasse (6) bewegliche Kammelektrode (7a) aufweist und wobei die bewegliche Kammelektrode (7a) eine Mehrzahl von Zähnen (8a) aufweist, welche sich in die positive Auslenkungsrichtung (x) erstrecken;
Herstellen einer fest mit dem Substrat (1) verbundenen Gegenelektrode (2a), wobei die Gegenelektrode (2a) eine feste Kammelektrode (3a) aufweist und wobei die feste Kammelektrode (3a) eine Mehrzahl von Zähnen (4a) aufweist, welche sich in eine der positiven Auslenkungsrichtung (x) entgegengesetzte Richtung erstrecken und wobei die Zähne (8a) der beweglichen Kammelektrode (7a) und die Zähne (4a) der festen Kammelektrode (3a) ineinander greifen; und
Herstellen einer fest mit dem Substrat (1) verbundenen Schirmelektrode (9a), welche geeignet ist, während einer Auslenkungsbewegung der Probemasse (6) eine pneumatische Dämpfung der Probemasse (6) zu erhöhen, wobei
die bewegliche Kammelektrode (7a) einen Kammrücken mit einer Kammrückenoberfläche aufweist, welche im Wesentlichen senkrecht zu der positiven Auslenkungsrichtung (x) ist;
die Schirmelektrode (9a) eine Schirmelektrodenoberfläche aufweist, welche im Wesentlichen parallel zu der Kammrückenoberfläche ist;
sich die Kammrückenoberfläche und die Schirmelektrodenoberfläche gegenüberstehen;
während einer Auslenkungsbewegung der Probemasse (6) sich ein Abstand zwischen der Kammrückenoberfläche und der Schirmelektrodenoberfläche verändert; und
wobei eine Veränderung des Abstands dazu geeignet ist, eine pneumatische Dämpfung der Probemasse (6) zu erhöhen;
**dadurch gekennzeichnet, dass**
die Gegenelektrode (2a) und die Schirmelektrode (9a) über eine Isolationsschicht (12) mechanisch miteinander verbunden sind.

7. Verfahren zum Herstellen eines Beschleunigungssensors nach Anspruch 6,
**dadurch gekennzeichnet, dass**
das Verfahren ferner umfasst:
Anpassen eines Gasdrucks des Beschleunigungssensors zum Einstellen einer optimalen Dämpfung der Auslenkungsbewegung der Probemasse (6).

8. Verfahren zum Herstellen eines Beschleunigungssensors nach Anspruch 6 oder 7,
**dadurch gekennzeichnet, dass**
das Verfahren ferner umfasst:
Wählen eines Abstands zwischen der beweglichen Kammelektrode (7a) und der Schirmelektrode (9a) bei einem gegebenen Gasdruck des Beschleunigungssensors zum Einstellen einer optimalen Dämpfung der Auslenkungsbewegung der Probemasse (6).

## Claims

1. An acceleration sensor comprising
a substrate (1) comprising a substrate surface;
a sample mass (6) that is movable relative to the substrate (1) along a positive deflection direction (x), which is substantially parallel to the substrate surface, wherein the sample mass (6) comprises a comb-like electrode (7a) that is movable together with the sample mass, and wherein the movable comb-like electrode (7a) comprises a plurality of teeth (8a), which extend along the positive deflection direction (x);
a counter electrode (2a) that is fixedly connected to the substrate (1), wherein the counter electrode (2a) comprises a fixed comb-like electrode (3a), and wherein the fixed comb-like electrode (3a) comprises a plurality of teeth (4a), which extend along a direction opposite to the positive deflection direction (x), and wherein the teeth (8a) of the movable comb-like electrode (7a) engage with the teeth (4a) of the fixed comb-like electrode (3a); and
a shielding electrode (9a) that is fixedly connected to the substrate (1), which is suitable to increase pneumatic damping of the sample mass (6) during a deflection movement of the sample mass (6), wherein
the movable comb-like electrode (7a) comprises a comb frontward side with a comb frontward surface that is substantially perpendicular to the positive deflection direction (x);
the shielding electrode (9a) comprises a shielding electrode surface that is substantially parallel to the comb frontward surface;
the comb frontward surface and the shielding electrode surface are opposite to each other;
a distance between the comb frontward surface and the shielding electrode surface changes during an deflection movement of the sample mass (6); and
wherein a change of the distance is suitable to increase pneumatic damping of the sample mass (6),
**characterized in that**
the counter electrode (2a) and the shielding electrode (9a) are mechanically connected to each other via an isolation layer (12).

2. The acceleration sensor according to claim 1,
**characterized in that**
the sample mass (6) and the shielding electrode (9a) have the same electric potential.

3. The acceleration sensor according to any one of claims 1 to 2,
**characterized in that**
the sample mass (6) comprises a further movable comb-like electrode (7b) that is movable together with the sample mass (6), wherein the further movable comb-like electrode (7b) comprises a plurality of teeth (8b), which extend along a direction opposite to the positive deflection direction (x);
the acceleration sensor comprises a further counter electrode (2b) that is fixedly connected to the substrate (1), wherein the further counter electrode (2b) comprises a further fixed comb-like electrode (3b), and wherein the further fixed comb-like electrode (3b) comprises a plurality of teeth (4b), which extend along the positive deflection direction (x), and wherein the teeth (8b) of the further movable comb-like electrode (7b) engage with the teeth (4b) of the further fixed comb-like electrode (3b); and
the acceleration sensor comprises a further shielding electrode (9b) that is fixedly connected to the substrate (1), which is suitable to increase pneumatic damping of the sample mass (6) during a deflection movement of the sample mass (6).

4. The acceleration sensor according to claim 3,
**characterized in that**
the shielding electrode (9a) and the further shielding electrode (9b) are integrally connected to each other.

5. The acceleration sensor according to any one of claims 1 to 4,
**characterized by**
a spring element (5) that couples the sample mass (6) and the substrate (1) such to each other that the sample mass (6) is able to perform a deflection movement along the positive deflection direction (x) and such that the sample mass (6) is substantially rigidly supported in a direction (y) that is perpendicular to the positive deflection direction (x) and parallel to the substrate surface.

6. A method for producing an acceleration sensor, wherein the method comprises:
forming of a substrate (1) that comprises a substrate surface;
forming of a sample mass (6) that is movable relative to the substrate (1) along a positive deflection direction (x), which is substantially parallel to the substrate surface, wherein the sample mass (6) comprises a comb-like electrode (7a) that is movable together with the sample mass (6), and wherein the movable comb-like electrode (7a) comprises a plurality of teeth (8a), which extend along the positive deflection direction (x);
producing of a counter electrode (2a) that is fixedly connected to the substrate (1), wherein the counter electrode (2a) comprises a fixed comb-like electrode (3a), and wherein the fixed comb-like electrode (3a) comprises a plurality of teeth (4a), which extend along a direction opposite to the positive deflection direction (x), and wherein the teeth (8a) of the movable comb-like electrode (7a) engage with the teeth (4a) of the fixed comb-like electrode (3a); and
forming of a shielding electrode (9a) that is fixedly connected to the substrate (1), which is suitable to increase pneumatic damping of the sample mass (6) during a deflection movement of the sample mass (6), wherein
the movable comb-like electrode (7a) comprises a comb frontward side with a comb frontward surface that is substantially perpendicular to the positive deflection direction (x);
the shielding electrode (9a) comprises a shielding electrode surface that is substantially parallel to the comb frontward surface;
the comb frontward surface and the shielding electrode surface are opposite to each other;
a distance between the comb frontward surface and the shielding electrode surface changes during an deflection movement of the sample mass (6); and
wherein a change of the distance is suitable to increase pneumatic damping of the sample mass (6);
**characterized in that**
the counter electrode (2a) and the shielding electrode (9a) are mechanically connected to each other via an isolation layer (12)..

7. The method for producing an acceleration sensor according to claim 6,
**characterized in that**
the method further comprises:
adapting a gas pressure of the acceleration sensor to adjust optimal damping of the deflection movement of the sample mass (6).

8. The method for producing an acceleration sensor according to claim 6 or claim 7,
**characterized in that**
the method further comprises:
selecting, at a predetermined gas pressure of the acceleration sensor, a distance between the movable comb-like electrode (7a) and the shielding electrode (9a) to adjust optimal damping of the deflection movement of the sample mass (6).

## Revendications

1. Détecteur d'accélération avec
un substrat (1) qui présente une surface de substrat ;
une masse de test (6) qui est mobile par rapport au substrat (1) dans un sens de déviation positif (x) globalement parallèle à la surface de substrat, la masse (6) comportant une électrode en forme de peigne (7a) mobile avec ladite masse de test, l'électrode en forme de peigne mobile (7a) présentant plusieurs dents (8a) qui s'étendent dans le sens de déviation positif (x) ;
une contre-électrode (2a) reliée de manière fixe au substrat (1), ladite contre-électrode (2a) comportant une électrode fixe en forme de peigne (3a), et ladite électrode fixe (3a) présentant plusieurs dents (4a) qui s'étendent dans un sens opposé au sens de déviation positif (x), et les dents (8a) de l'électrode mobile (7a) et les dents (4a) de l'électrode fixe (3a) s'interpénétrant ; et
une électrode écran (9a) qui est reliée de manière fixe au substrat (1) et qui est apte à accroître un amortissement pneumatique de la masse de test (6) pendant un mouvement de déviation de ladite masse de test (6),
l'électrode mobile en forme de peigne (7a) présentant un dos de peigne avec une surface de dos de peigne qui est globalement perpendiculaire au sens de déviation positif (x) ;
l'électrode écran (9a) présentant une surface d'électrode écran qui est globalement parallèle à la surface de dos de peigne ;
la surface de dos de peigne et la surface d'électrode écran se faisant face ;
une distance entre la surface de dos de peigne et la surface d'électrode écran variant pendant un mouvement de déviation de la masse de test (6) ; et
une variation de cette distance étant apte à accroître un amortissement pneumatique de la masse de test (6) ;
**caractérisé en ce que** la contre-électrode (2a) et l'électrode écran (9a) sont reliées mécaniquement entre elles par l'intermédiaire d'une couche isolante (12).

2. Détecteur d'accélération selon la revendication 1, **caractérisé en ce que** la masse de test (6) et l'électrode écran (9a) sont à un même potentiel électrique.

3. Détecteur d'accélération selon l'une des revendications 1 à 2, **caractérisé en ce que** la masse de test (6) comporte une autre électrode mobile en forme de peigne (7b), qui est mobile avec la masse de test (6), cette autre électrode mobile en forme de peigne (7b) présentant plusieurs dents (8b) qui s'étendent dans le sens opposé au sens de déviation positif (x) ;
le détecteur d'accélération comporte une autre contre-électrode (2b) qui est reliée de manière fixe au substrat (1), cette autre contre-électrode (2b) comportant une autre électrode fixe en forme de peigne (3b), et cette autre électrode en forme de peigne (3b) présentant plusieurs dents (4b) qui s'étendent dans le sens de déviation positif (x), et les dents (8b) de l'autre électrode mobile (7b) et les dents (4b) de l'autre électrode fixe (3b) s'interpénétrant ; et
le détecteur d'accélération comportant une autre électrode écran (9b) qui est reliée de manière fixe au substrat (1) et qui est apte à accroître un amortissement pneumatique de la masse de test (6) pendant un mouvement de déviation de ladite masse de test (6).

4. Détecteur d'accélération selon la revendication 3, **caractérisé en ce que** l'électrode écran (9a) et l'autre électrode écran (9b) sont reliées d'une seule pièce.

5. Détecteur d'accélération selon l'une des revendications 1 à 4, **caractérisé par** un élément à ressort (5) qui relie la masse de test (6) et le substrat (1), de sorte que ladite masse de test (6) peut décrire un mouvement de déviation dans le sens de déviation positif (x) et de sorte que la masse de test (6) est montée globalement de manière rigide dans un sens (y) perpendiculaire au sens de déviation positif (x) et parallèle à la surface de substrat.

6. Procédé pour produire un détecteur d'accélération, le procédé comprenant :
la production d'un substrat (1) qui présente une surface de substrat ;
la production d'une masse de test (6) qui est mobile par rapport au substrat (1) dans un sens de déviation positif (x) globalement parallèle à la surface de substrat, la masse (6) comportant une électrode en forme de peigne (7a) mobile avec ladite masse de test, l'électrode en forme de peigne mobile (7a) présentant plusieurs dents (8a) qui s'étendent dans le sens de déviation positif (x) ;
la production d'une contre-électrode (2a) reliée de manière fixe au substrat (1), ladite contre-électrode (2a) comportant une électrode fixe en forme de peigne (3a), et ladite électrode fixe (3a) présentant plusieurs dents (4a) qui s'étendent dans un sens opposé au sens de déviation positif (x), et les dents (8a) de l'électrode mobile (7a) et les dents (4a) de l'électrode fixe (3a) s'interpénétrant ; et
la production d'une électrode écran (9a) qui est reliée de manière fixe au substrat (1) et qui est apte à accroître un amortissement pneumatique de la masse de test (6) pendant un mouvement de déviation de ladite masse de test (6),
l'électrode mobile en forme de peigne (7a) présentant un dos de peigne avec une surface de dos de peigne qui est globalement perpendiculaire au sens de déviation positif (x) ;
l'électrode écran (9a) présentant une surface d'électrode écran qui est globalement parallèle à la surface de dos de peigne ;
la surface de dos de peigne et la surface d'électrode écran se faisant face ;
une distance entre la surface de dos de peigne et la surface d'électrode écran variant pendant un mouvement de déviation de la masse de test (6) ; et
une variation de cette distance étant apte à accroître un amortissement pneumatique de la masse de test (6) ;
**caractérisé en ce que** la contre-électrode (2a) et l'électrode écran (9a) sont reliées mécaniquement entre elles par l'intermédiaire d'une couche isolante (12).

7. Procédé pour produire un détecteur d'accélération selon la revendication 6, **caractérisé en ce qu'**il comprend également :
l'adaptation d'une pression de gaz du détecteur d'accélération pour régler un amortissement optimal du mouvement de déviation de la masse de test (6).

8. Procédé pour produire un détecteur d'accélération selon la revendication 6 ou 7, **caractérisé en ce qu'**il comprend également :
la sélection d'une distance entre l'électrode mobile en forme de peigne (7a) et l'électrode écran (9a) pour une pression de gaz donnée du détecteur de détection, pour régler un amortissement optimal du mouvement de déviation de la masse de test (6).
